# FASCICULE DE BREVET EUROPEEN

(11) **EP 4 377 161 B1**
(45) Date de publication et mention de la délivrance du brevet: **04.03.2026**
(21) Numéro de dépôt: 22743535.1
(22) Date de dépôt: 24.06.2022
(51) Int. Cl.: B60R 25/24, G07C 9/00

(54) **PROCÉDÉ D'OUVERTURE D'UN VÉHICULE ET CLEF MAINS LIBRES ASSOCIÉE**
VERFAHREN ZUM ÖFFNEN EINES FAHRZEUGS UND ZUGEHÖRIGER FREISPRECHSCHLÜSSEL
METHOD FOR OPENING A VEHICLE AND ASSOCIATED HANDS-FREE KEY

(30) Priorité: 27.07.2021 FR 2108122
(43) Date de publication de la demande: 05.06.2024
(73) Titulaire: Stellantis Auto SAS, 78300 Poissy (FR)
(72) Inventeur: MICHEL, Stephane, 90150 Foussemagne (FR); LEROY, Nicolas, 90850 Essert (FR); ROY, Cyrille, 68200 Mulhouse (FR)
(74) Mandataire: ESIP
(86) Numéro de dépôt international: PCT/FR2022/051245
(87) Numéro de publication internationale: WO 2023/007067

(56) Documents cités:
- EP-A1- 2 612 795
- EP-A1- 3 318 704
- FR-A1- 3 063 947
- US-A1- 2020 079 322

## Description

L'invention concerne une clef (autrement dit : commande) mains libres. Une clef mains libres présente dans un sac ou une poche à proximité d'un véhicule envoie une commande d'ouverture au véhicule ce qui déverrouille et maintient déverrouillé les portes et déconnecte ou maintient déconnecté l'anti-démarrage du moteur. Le verrouillage des portes et l'entrée en action de l'anti-démarrage sont opérés dès que la clef mains libres (donc le conducteur) s'éloigne du véhicule.

Des attaque relais, pour prendre le contrôle d'un véhicule, consistant à relayer le signal entre le véhicule et la clef mains libres, avec une paire d'antennes munies d'amplificateurs, sont connues. Pour se protéger contre ces attaques, la clef mains libres est inhibée lorsqu'elle est immobilisée loin du véhicule pendant un temps déterminé.

La distance entre la clef mains libres et le véhicule peut être par exemple estimée par une mesure, réalisée par exemple par la clef, de l'amplitude d'un signal radio émis par le véhicule. Ainsi, la clef est considérée comme éloignée du véhicule lorsque l'amplitude du signal radio reçu par la clef est en dessous d'une certaine limite.

Cependant, lors de la production d'un véhicule, le signal radio peut être absent, et la clef immobile dans le véhicule. Dans ce cas, la clef est inhibée (car considérée loin du véhicule). Lorsque le signal radio est à nouveau présent, une intervention manuelle est nécessaire pour déplacer la clef afin de la désinhiber pour déverrouiller les portes et déconnecter l'anti-démarrage du moteur.

En outre, l'état de la technique est connu des documents FR3063947A1, EP3318704A1 et EP2612795A1.

Pour remédier à cet inconvénient, l'invention concerne un procédé d'ouverture d'un véhicule (automobile) mis en œuvre par une clef mains libres comprenant une interface de communication sans fil (pour communiquer avec le véhicule et éventuellement un autre dispositif extérieur à la clef) et un capteur de mouvement de la clef, le procédé d'ouverture comprenant les étapes suivantes :
- Envoi d'une commande d'ouverture (du véhicule) par (autrement dit via ou par l'intermédiaire) l'interface de communication sans fil à partir de données de sécurisation lorsqu'une (ou à la condition qu'une) distance estimée entre la clef et le véhicule est inférieure à un seuil,
- Inhibition (ou blocage) de l'envoi de la commande d'ouverture (c'est-à-dire qu'aucune commande d'ouverture n'est plus envoyée par la clef), si (ou dans le cas où) aucun mouvement de la clef n'a été détecté par le capteur de mouvement pendant un temps déterminé alors que (ou quand) la distance estimée est supérieure au seuil, puis,
- Désinhibition (ou déblocage) de l'envoie de la commande d'ouverture lorsqu'un (ou à la condition qu'un) mouvement de la clef est détecté par le capteur de mouvement,

Caractérisé en ce qu'il comprend les étapes suivantes
- Désactivation (ou arrêt) de l'inhibition à partir (ou sur détection) d'un évènement (ou sur un évènement) de désactivation (des commandes d'ouvertures sont envoyées par la clef, même lorsque plus aucun mouvement de la clef est détecté), l'étape de désactivation étant soit une étape d'initialisation de la clef avec les données de sécurisation reçues par l'interface de communication, soit une étape de communication entre la clef mains libres et le véhicule, alors que la clef mains libres n'a jamais communiquée avec le véhicule auparavant (par exemple parce que l'unité électronique du véhicule apte à émettre le signal radio avec la clef mains libres n'a pas été activée), puis
- Réactivation (ou redémarrage) de l'inhibition sur détection (ou à partir) d'un évènement (ou sur un évènement) de réactivation (c'est-à-dire que si la distance estimée entre la clef et le véhicule est inférieure à un seuil, alors la clef mains libres envoi une commande d'ouverture par l'interface de communication sans fil).

L'évènement de réactivation étant l'expiration d'une durée depuis l'évènement de désactivation.

L'invention permet ainsi d'éviter :
- Une intervention manuelle pour déplacer la clef afin de la désinhiber pour déverrouiller les portes et déconnecter l'anti-démarrage du moteur,
- Toute modification de la production des véhicules puisque l'inhibition est réactivée automatiquement au bout d'une durée qui correspond à une durée d'une ou plusieurs étapes de production du véhicule.

Par exemple, la clef mains libres comprend une unité de mesure du temps et la durée depuis l'évènement de désactivation est mesurée par l'unité de mesure du temps.

Le seuil est par exemple de 1,5 ou 2 mètres. Le temps déterminé est par exemple de 2 minutes.

La commande d'ouverture commande préférentiellement l'ouverture des portes du véhicule et déconnecte l'anti-démarrage du moteur.

Le capteur de mouvement comprend par exemple un accéléromètre.

Les données de sécurisation sont par exemple des clefs cryptographiques permettant d'authentifier la clef mains libres auprès du véhicule pour autoriser le déverrouillage des portes et la déconnection l'anti-démarrage du moteur.

La distance entre la clef et le véhicule peut être par exemple estimée par une mesure de l'amplitude d'un signal radio émis par le véhicule, par exemple reçu par l'interface de communication sans fil. Cette mesure peut être réalisée par la clef.

Selon un mode de réalisation, la durée, lorsque l'évènement de désactivation est l'étape d'initialisation, peut être comprise entre 20 et 40 jours.

L'inhibition de la clef mains libres est désactivée pendant la durée habituelle estimée entre l'initialisation de la clef et la fin de la production.

Selon un exemple de réalisation, la durée, lorsque l'événement de désactivation est l'étape de communication, peut-être comprise entre 2 et 10 jours.

L'inhibition de la clef mains libres est désactivée durant la durée habituelle estimée des téléchargements sur les calculateurs, le contrôle de la fabrication et les retouches, à partir de l'étape de communication, c'est-à-dire jusqu'à la fin estimée de la production.

L'étape de communication (c'est-à-dire un événement de désactivation) peut intervenir alors que l'inhibition a été désactivée par l'étape d'initialisation sans avoir été réactivée avant l'étape de communication.

Selon un mode de réalisation, la clef mains libres comprend un bouton, et l'événement de réactivation est la détection d'un appui sur le bouton.

Le bouton est préférentiellement sur une surface extérieure de la clef. Il peut être appuyé par un utilisateur de la clef.

L'évènement de réactivation peut-être également une commande reçue par la clef.

L'invention concerne aussi un programme d'ordinateur comprenant des instructions pour la mise en œuvre du procédé selon l'invention.

L'invention concerne également une clef mains libres configurée pour mettre en œuvre les étapes du procédé selon l'invention et un véhicule automobile comprenant la clef mains libres.

La clef mains libres comprend par exemple une unité centrale connectée par un bus au capteur de mouvement, à l'interface sans fil, et au bouton. L'unité centrale peut par exemple mémoriser les données de sécurisation. L'unité centrale comprend par exemple une unité de mesure de temps pour mesurer la durée.

L'unité centrale est par exemple configurée pour mettre en œuvre les étapes du procédé selon l'invention. L'unité centrale est par exemple constituée par un microcontrôleur ou un processeur.

On entend qu'un élément tel que la clef main libre, l'unité centrale ou un autre élément est «configuré pour» réaliser une opération, par le fait que l'élément comporte des moyens pour (autrement dit «est conformé pour » ou «est adapté pour») réaliser l'opération. Il s'agit préférentiellement de moyens électroniques, par exemple un programme d'ordinateur, des données en mémoire et/ou des circuits électroniques spécialisés.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig.1] représente une clef mains libres selon un mode de réalisation de l'invention.
[Fig.2] représente un mode de réalisation du procédé selon l'invention mis en œuvre par la clef mains libres de la figure 1.

### Description détaillée d'un exemple de réalisation de l'invention

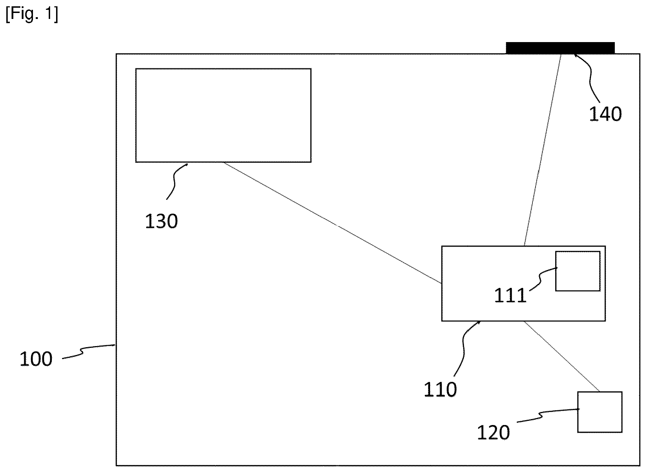

En référence à la figure 1, la clef mains libres 100 comprend par exemple une unité centrale 110 connectée par un bus à un capteur de mouvement 130, à l'interface sans fil 120, et un bouton 140. L'unité centrale 110 peut par exemple mémoriser les données de sécurisation.

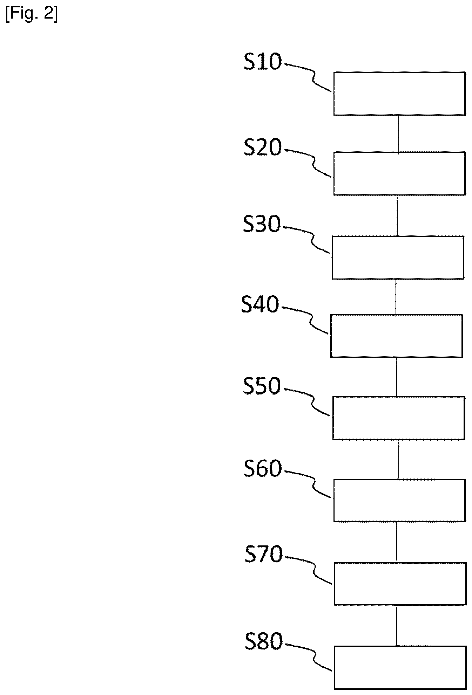

L'unité centrale 110 est configurée pour réaliser les étapes du procédé selon l'invention et peut comporter un microprocesseur ou un microcontrôleur qui peut mémoriser un programme d'ordinateur comprenant des instructions exécutables par le microprocesseur ou le microcontrôleur (et/ou peuvent comporter des circuits spécialisés) pour la mise en œuvre du procédé selon la figure 2.

L'unité centrale 110 comprend par exemple une unité de mesure de temps 111.

Le capteur de mouvement 130 comprend par exemple un accéléromètre. Le bouton 140 est préférentiellement sur une surface extérieure de la clef 100. Il peut être appuyé par un utilisateur de la clef.

Une distance entre la clef 100 et un véhicule (non représentés) peut être par exemple estimée par une mesure de l'amplitude d'un signal radio émis par le véhicule, par exemple reçu par l'interface de communication sans fil 120. Cette mesure peut être réalisée par la clef 100.

Les données de sécurisation sont par exemple des clefs cryptographiques permettant d'authentifier la clef mains libres 100 auprès du véhicule pour autoriser le déverrouillage des portes et la déconnection l'anti-démarrage du moteur du véhicule.

En référence à la figure 2, à l'étape S10, la clef 100 est initialisée avec les données de sécurisation reçues par l'interface de communication 120, et l'inhibition de l'envoi de la commande d'ouverture telle que définie ci-dessous est désactivé.

A l'étape S20, un véhicule automobile (non représenté) est assemblé sur une ligne de production. La clef mains libres est déposée dans le véhicule.

L'unité électronique du véhicule apte à émettre le signal radio avec la clef mains libres 100 est désactivée durant l'assemblage.

Donc, bien que la clef mains libres ne reçoive pas de signal radio, l'envoie de commande d'ouverture par la clef mains libres n'est pas inhibé.

A l'expiration d'une durée depuis l'initialisation mesurée par l'unité de mesure de temps 111, par exemple comprise entre 20 et 40 jours, l'inhibition de l'envoi de la commande d'ouverture telle que définie ci-dessous est réactivée. En effet, la production est présumée terminée, la protection contre les attaques relais est réactivée.

A l'étape S30, le véhicule entre dans une phase où sont réalisés des téléchargements sur les calculateurs, le contrôle de la fabrication et les retouches. Durant cette phase l'unité électronique du véhicule apte à émettre le signal radio avec la clef mains libres 100 est activée à l'étape S40. Les systèmes de verrouillage et d'anti-démarrage sont mis en service.

Cette phase dure par exemple entre 2 et 10 jours.

Durant cette étape, une première communication entre la clef mains libres 100 et le véhicule intervient, alors que la clef mains libres 100 n'a jamais communiquée avec le véhicule auparavant, et dans lequel l'événement de désactivation est cette première communication. Durant cette première communication, l'inhibition de l'envoi de la commande d'ouverture telle que définie ci-dessous peut-être désactivée.

A l'étape S50, grâce à la désactivation préalable de l'inhibition de l'envoi de la commande d'ouverture, bien que la clef mains libres n'ai pas été déplacée alors qu'elle ne recevait pas le signal radio pendant un temps déterminé (par exemple 2 minutes), la clef main-libre commande d'ouverture du véhicule par l'interface de communication sans fil 120, ce qui commande ou maintien du déverrouillage des portes et de l'antidémarrage du véhicule. Cette commande est conditionnée par le fait que la distance estimée entre la clef 100 et le véhicule soit inférieure à un seuil, fixé par exemple à 2 mètres. Ce qui est le cas, puisque la clef mains libres est dans le véhicule.

A l'étape S60, à l'expiration d'une durée depuis la première communication mesurée par l'unité de mesure de temps 111, par exemple comprise entre 2 et 10 jours, l'inhibition de l'envoi de la commande d'ouverture telle que définie ci-dessous est réactivée. En effet, les téléchargements sur les calculateurs, le contrôle de la fabrication et les retouches, et donc la production, sont présumés terminés. La protection contre les attaques relais est réactivée.

Selon un mode de réalisation, quand un appui est détecté sur le bouton, l'inhibition de l'envoi de la commande d'ouverture telle que définie ci-dessous peut-être également réactivée.

A l'étape S70, le véhicule est par exemple livré à son propriétaire. Lorsque la clef est immobile et éloignée du véhicule, l'envoie de la commande est inhibé. Autrement dit, l'inhibition de l'envoi de la commande d'ouverture est mise en œuvre et peut être définie de la manière suivante : l'envoi de la commande d'ouverture est inhibé, c'est-à-dire qu'aucune commande d'ouverture n'est plus envoyée par la clef 100, si aucun mouvement de la clef n'a été détecté par le capteur de mouvement 130 pendant un temps déterminé, par exemple 2 minutes, alors que la distance estimée est supérieure au seuil, fixé par exemple à 2 mêtres.

Puis, à l'étape S80, lorsque la clef est déplacée et qu'un mouvement de la clef est détecté par le capteur de mouvement 130, l'envoie de la commande d'ouverture est désinhibée. Lorsque la distance estimée entre la clef 100 et le véhicule est inférieure au seuil, une commande d'ouverture du véhicule est envoyée par l'interface de communication sans fil 120 à partir de données de sécurisation.

## Revendications

1. Procédé d'ouverture d'un véhicule mis en œuvre par une clef mains libres (100) comprenant une interface de communication sans fil (120) et un capteur de mouvement (130) de la clef (100), le procédé d'ouverture comprenant les étapes suivantes :
- Envoi d'une commande d'ouverture (S50) par l'interface de communication sans fil (120) à partir de données de sécurisation lorsqu'une distance estimée entre la clef (100) et le véhicule est inférieure à un seuil,
- Inhibition de l'envoi de la commande d'ouverture (S70), si aucun mouvement de la clef n'a été détecté par le capteur de mouvement (130) pendant un temps déterminé alors que la distance estimée est supérieure au seuil, puis,
- Désinhibition de l'envoie de la commande d'ouverture (S80) lorsqu'un mouvement de la clef (100) est détecté par le capteur de mouvement (130),
**Caractérisé en ce qu'**il comprend les étapes suivantes
- Désactivation de l'inhibition (S10, S40) à partir d'un évènement de désactivation, l'évènement de désactivation étant soit une étape d'initialisation (S10) de la clef 100, avec les données de sécurisation reçues par l'interface de communication (120), soit une étape de communication (S40) entre la clef mains libres (100) et le véhicule, alors que la clef mains libres (100) n'a jamais communiquée avec le véhicule auparavant, puis
- Réactivation de l'inhibition (S60) sur détection d'un évènement de réactivation,
L'évènement de réactivation étant l'expiration d'une durée depuis l'évènement de désactivation.

2. Procédé d'ouverture selon la revendication 1 dans lequel la durée est comprise entre 20 et 40 jours lorsque l'évènement de désactivation est l'étape d'initialisation.

3. Procédé d'ouverture selon la revendication 1 dans lequel la durée est comprise entre 2 et 10 jours lorsque l'évènement de désactivation est l'étape de communication.

4. Procédé d'ouverture selon l'une quelconque des revendications précédentes dans lequel la clef mains libres (100) comprend un bouton (140), et dans lequel l'événement de réactivation est la détection d'un appui sur le bouton (140).

5. Programme d'ordinateur comprenant des instructions pour la mise en œuvre par la clef mains libres de la revendication 6 du procédé selon l'une quelconque des revendications précédentes.

6. Clé mains libres (100) comprenant une interface de communication sans fil (120) et un capteur de mouvement (130) de la clef (100) configurée pour mettre en œuvre les étapes du procédé selon l'une quelconque des revendications 1 à 4.

7. Véhicule automobile comprenant la clef mains libres (100) selon la revendication précédente.

## Patentansprüche

1. Verfahren zum Öffnen eines Fahrzeugs, das durch einen Freisprechschlüssel (100) implementiert wird, der eine drahtlose Kommunikationsschnittstelle (120) und einen Bewegungssensor (130) des Schlüssels (100) umfasst, wobei das Verfahren zum Öffnen die folgenden Schritte umfasst:
- Senden eines Öffnungsbefehls (S50) über die drahtlose Kommunikationsschnittstelle (120) aus Sicherheitsdaten, wenn ein geschätzter Abstand zwischen Schlüssel (100) und Fahrzeug unter einem Schwellenwert liegt,
- Unterdrückung der Abgabe des Öffnungsbefehls (S70), wenn der Bewegungssensor (130) während einer bestimmten Zeit keine Schlüsselbewegung erfasst hat, während die geschätzte Entfernung über dem Schwellenwert liegt, und
- Abschalten der Sendung des Öffnungsbefehls (S80), wenn eine Bewegung des Schlüssels (100) durch den Bewegungssensor (130) erfasst wird,
**dadurch gekennzeichnet, dass** sie folgende Schritte umfasst:
- Deaktivierung der Hemmung (S10, S40) aus einem Deaktivierungsereignis, wobei das Deaktivierungsereignis entweder ein Initialisierungsschritt (S10) des Schlüssels 100 mit den von der Kommunikationsschnittstelle (120) empfangenen Sicherheitsdaten oder ein Kommunikationsschritt (S40) zwischen dem Freisprechschlüssel (100) und dem Fahrzeug ist, während der Freisprechschlüssel (100) zuvor nie mit dem Fahrzeug kommuniziert hat, und dann
- Reaktivierung der Hemmung (S60) nach Erkennung eines Reaktivierungsereignisses,
Das Reaktivierungsereignis ist das Ablaufen einer Zeitspanne seit dem Deaktivierungsereignis.

2. Öffnungsverfahren nach Anspruch 1, wobei die Dauer zwischen 20 und 40 Tagen liegt, wenn das Deaktivierungsereignis der Initialisierungsschritt ist.

3. Öffnungsverfahren nach Anspruch 1, wobei die Dauer zwischen 2 und 10 Tagen liegt, wenn das Deaktivierungsereignis der Kommunikationsschritt ist.

4. Öffnungsverfahren nach einem der vorhergehenden Ansprüche, bei dem der Freisprechschlüssel (100) einen Knopf (140) umfasst und bei dem das Reaktivierungsereignis das Erfassen eines Drücken des Knopfes (140) ist.

5. Computerprogramm, das Befehle zur Durchführung des Verfahrens nach einem der vorhergehenden Ansprüche mit dem Freisprechschlüssel nach Anspruch 6 umfasst.

6. Freisprechschlüssel (100) mit einer drahtlosen Kommunikationsschnittstelle (120) und einem Bewegungssensor (130) des Schlüssels (100), der so konfiguriert ist, dass er die Schritte des Verfahrens nach einem der Ansprüche 1 bis 4 ausführt.

7. Kraftfahrzeug mit dem Freisprechschlüssel (100) nach dem vorhergehenden Anspruch.

## Claims

1. Method of opening a vehicle implemented by a hand-free key (100) comprising a wireless communication interface (120) and a motion sensor (130) of the key (100), the opening method comprising the following steps:
- sending an opening purchase order (S 50) by the wireless interface (120) from security mode data when an estimated distance between the key (100) and the vehicle is less than one threshold,
- inhibiting the sending of the opening order (S 70), if no movement of the key has been detected by the movement sensor (130) for a determined time while the estimated distance is greater than the threshold, then,
- disinhibition of the opening order (S 80) when a movement of the key (100) is detected by the movement sensor (130),
**characterised in that** it comprises the following steps:
- deactivation of the inhibition (S 10, S 40) from a deactivation event, the deactivation event being either an initialisation step (S 10) of the key 100, with the security mode data received by the call interface (120), or a call step (S 40) between the hand-free key (100) and the car, whereas the hand-free key (100) has never previously communicated with the car, then
- reactivation of the inhibition (S 60) on detection of a reactivation event,
the reactivation event being the expiration of a period since the deactivation event.

2. The opening method according to claim 1, wherein the duration is between 20 and 40 days when the deactivation event is the initialization step.

3. The opening method according to claim 1, wherein the duration is between 2 and 10 days when the deactivation event is the communication step.

4. Opening method according to any one of the previous claims, wherein the hand-free key (100) comprises a button (140), and wherein the reactivation event is the detection of a press on the button (140).

5. Computer plan comprising instructions for the implementation by the hand-free key of claim 6 of the method according to any one of the previous claims.

6. Hand-free key (100) comprising a wireless communication interface (120) and a motion sensor (130) of the key (100) configured to implement the steps of the method according to any one of claims 1 to 4.

7. Motor vehicle comprising the hand-free key (100) according to the previous claim.
